# EUROPÄISCHE PATENTSCHRIFT

(11) **EP 3 305 574 B1**
(45) Veröffentlichungstag und Bekanntmachung des Hinweises auf die Patenterteilung: **02.11.2022**
(21) Anmeldenummer: 17188970.2
(22) Anmeldetag: 01.09.2017
(51) Int. Cl.: B60K 6/52, B60K 6/22, B60W 10/06, B60W 10/08, B60W 20/12, B62D 59/04, B60W 50/00, B60W 30/19, B60W 20/11

(54) **VERFAHREN ZUM BETRIEB EINER ACHSE EINER STRASSENFAHRZEUG-ZUGKOMBINATION**
METHOD FOR OPERATING AN AXIS OF A ROAD VEHICLE TRAIN COMBINATION
PROCÉDÉ DE FONCTIONNEMENT D'UN ESSIEU D'UNE COMBINAISON DE TRAIN ET DE VÉHICULE ROUTIÈRE

(30) Priorität: 02.09.2016 DE 102016010573
(43) Veröffentlichungstag der Anmeldung: 11.04.2018
(73) Patentinhaber: MAN Truck & Bus SE, 80995 München (DE)
(72) Erfinder: Wagner, Dr., Philipp, 86316 Friedberg (DE); Fleischhacker, Dr., Jan, 82140 Olching (DE); Kraaijenhagen, Ben, 82131 Stockdorf (DE); Kohrs, Dr., Christian, 73207 Plochingen (DE)
(74) Vertreter: Liebl, Thomas

(56) Entgegenhaltungen:
- EP-A1- 1 886 905
- DE-A1-102008 001 565
- DE-A1-102014 210 539
- US-A1- 2005 000 739
- US-A1- 2007 193 795
- AGLIANY Y ET AL: "DER NEUE DIESELHYBRIDANTRIEB VON SPA", MTZ - MOTORTECHNISCHE ZEITSCHRIFT, SPRINGER, Bd. 73, Nr. 9, 1. September 2012 (2012-09-01), Seiten 666-672, XP001577869, ISSN: 0024-8525, DOI: 10.1007/S35146-012-0456-5

## Beschreibung

Die Erfindung betrifft ein Verfahren zum Betrieb wenigstens einer Achse einer Straßenfahrzeug-Zugkombination, wobei die Achse außerhalb einer Zugmaschine der Straßenfahrzeug-Zugkombination an wenigstens einem mit der Zugmaschine gezogenen Fahrzeug angeordnet ist.

Der Begriff "Zugmaschine" steht hier sowohl für eine Sattelzugmaschine als auch für einen Lastkraftwagen mit einer Anhängekupplung. Der Begriff "gezogenes Fahrzeug" soll ein Trailer als Sattelauflieger, einen Dolly oder einen Anhänger umfassen.

Zugkombinationen aus den vorstehend genannten Zugmaschinen und gezogenen Fahrzeugen sind allgemein bekannt.

Bei solchen Zugkombinationen, insbesondere bei langen Zugkombinationen, zum Beispiel sogenannten Lang-LKWs, EuroCombis und Road-Train-Kombinationen können fahrbetriebsabhängig die fahrdynamischen und längsdynamischen Eigenschaften unbefriedigend sein, wobei insbesondere frühzeitig Traktionsgrenzen in Verbindung mit relativ hohem Reifenverschleiß erreicht werden können.

Aus der US 2005/0000739 A1 ist eine Zugmaschine mit einem Trailer bekannt, wobei der Trailer eine von einem Elektromotor antreibbare Achse aufweist. Ferner ist ein Kabel vorgesehen, mit dem eine Verbindung zwischen dem Elektromotor und einem Steuergerät der Zugmaschine herstellbar ist.

Die US 2007/0193795 A1 beschreibt einen Anhänger mit zwei angetriebenen Rädern, wozu ein Energiespeicher am Anhänger angebracht ist. Der Anhänger weist eine Verbindungs- und Steuereinheit auf, über die der Anhänger Eingangssignale von Sensoren des Anhängers und des Zugfahrzeugs empfangen kann.

Aufgabe der Erfindung ist es, ein Verfahren zum Betrieb wenigstens einer Achse einer Straßenfahrzeug-Zugkombination bereitzustellen, mittels dem die fahrdynamischen Eigenschaften der Straßenfahrzeug-Zugkombination effektiv verbessert werden.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird ein Verfahren zum Betrieb wenigstens einer Achse einer Straßenfahrzeug-Zugkombination vorgeschlagen, wobei die wenigstens eine Achse außerhalb einer Zugmaschine der Straßenfahrzeug-Zugkombination an wenigstens einem mit dem Zugfahrzeug gezogenen bzw. mit dem Zugfahrzeug gekoppelten Fahrzeug der Straßenfahrzeug-Zugkombination angeordnet ist.

Erfindungsgemäß werden Daten zu dem aktuellen und gegebenenfalls zukünftigen Fahrbetriebszustand der Straßenfahrzeug-Zugkombination, insbesondere mittels der Zugmaschine und/oder mittels des wenigstens einen gezogenen Fahrzeugs, ermittelt.

Aus diesen Daten wird ein zeitweiser Antriebsbedarf zusätzlich zum Antrieb durch die Zugmaschine ermittelt. Ein solcher Antriebsbedarf kann hier als positiver Bedarf, zum Beispiel beim Anfahren oder Beschleunigen zur Unterstützung des Zugmaschinenantriebs oder als negativer Bedarf, zum Beispiel beim Bremsen, gegebenenfalls in Verbindung mit einer Rekuperation und einem Energiespeicher ermittelt werden.

Die Daten von Fahrbetriebszuständen der Zugkombination können in der Zugmaschine erfasst werden oder liegen dort ohnehin für andere Funktionen vor und können gegebenenfalls dort bereits ausgewertet und zusammen mit Steuersignalen an das gezogene Fahrzeug, insbesondere an ein dort ausgebildetes Antriebsmodul weitergeleitet werden. Alternativ oder zusätzlich können im gezogenen Fahrzeug, insbesondere in einem dortigen Antriebsmodul Daten von Fahrbetriebszuständen erfasst und gegebenenfalls ausgewertet werden. Entsprechend können auch erforderliche Steuerungselemente in der Zugmaschine oder im gezogenen Fahrzeug oder dort aufgeteilt angeordnet sein.

Zur Realisierung des erfindungsgemäßen Verfahrens ist die wenigstens eine Achse des gezogenen Fahrzeugs als Antriebsmodul und zeitweise Triebachse mit einer gesteuert aktivierbaren Antriebseinheit ausgebildet. Bei einem ermittelten zeitweisen Antriebsbedarf wird dann verfahrensgemäß die Antriebseinheit automatisch aktiviert und zugeschaltet, so dass damit die Achse zeitweise von einem Laufachsenbetrieb in einen Triebachsenbetrieb geschaltet wird.

Vorteilhaft werden dann die Antriebskräfte bedarfsweise auf mehrere Achsen und dabei auf wenigstens eine zusätzliche Triebachse eines gezogenen Fahrzeugs bei einem erfassten zusätzlichen Antriebsbedarf und relevanten Fahrbetriebszuständen verteilt, wodurch die fahrdynamischen und längsdynamischen Eigenschaften ebenso wie die Energieeffizienz verbessert werden können.

Eine aktivierte Antriebseinheit wird mit Antriebsenergie aus der Zugmaschine, vorzugsweise mittels einer steckbaren Versorgungsleitung, und/oder aus einem Energiespeicher des Antriebsmoduls versorgt.

Vorteilhaft kann dabei zudem ein optimierter Ladungsausgleich zwischen einem Energiespeicher, insbesondere einer elektrischen Batterie, der Zugmaschine und einem Energiespeicher, insbesondere einer elektrischen Batterie, des Antriebsmoduls automatisch in Verbindung mit einem von Fahrbetriebszuständen und gegebenenfalls einer vorausliegenden Topographie abhängigen Energiemanagement erfolgen. Beispielsweise sollte im Fahrverlauf ein, einer Kuppe folgendes Gefälle nicht mit vollen Batterien befahren werden, damit eine Rekuperation stattfinden kann und es nicht zur Überladung der Komponenten kommt. Umgekehrt benötigt eine Steigung eine geladene Batterie/Batterien eines oder mehrerer Antriebsmodule, um die Zugmaschine mit Antriebsleistung durch Boosten zu unterstützen. Zweckmäßig werden hier GPS-Informationen bezüglich einer vorausliegenden Topographie im Energiemanagement berücksichtigt, wodurch die Gesamtsystemeffizienz erhöht werden kann.

Die Verwendung eines zuschaltbaren Verbrennungsmotors in einem Antriebsmodul ist zwar grundsätzlich möglich, jedoch nur schwierig realisierbar, so dass vorzugsweise andere alternative Antriebskonzepte verwendet werden sollen:
Vorteilhaft kann im Antriebsmodul wenigstens eine elektrische Antriebskomponente, insbesondere wenigstens ein Elektromotor, wenigstens eine Batterie als Energiespeicher und/oder elektrische Steuerelemente, verwendet werden. Zusätzlich oder alternativ können hydraulische und/oder pneumatische und/oder mechanische Antriebssysteme mit entsprechenden Steuerelementen, vorzugsweise mit wenigstens einem als Druckspeicher ausgebildeten Energiespeicher, je nach den Gegebenheiten in einem Antriebsmodul eingesetzt werden.

In einer vorteilhaften Konkretisierung des Verfahrens soll durch eine drahtlose oder kabelgebundene Kommunikation und einen Datenaustausch zwischen Zugmaschine und Antriebsmodul, vorzugsweise über eine standardisierte Schnittstelle mit einer Kombination aus steckbarer Kommunikations- und Energieversorgungsleitung, das Antriebsmodul an die Zugmaschine Informationen über seinen Status, insbesondere über den Ladezustand eines zugeordneten Energiespeichers, übermitteln. Im Gegenzug soll die Zugmaschine durch Nutzung seiner Sensorik bezüglich Fahrbetriebszuständen und gegebenenfalls nach Ermittlung eines zeitweisen Antriebsbedarfs Steuerbefehle an das Antriebsmodul übermitteln, die eine Bremsung der zeitweisen Triebachse, insbesondere in Verbindung mit einer Rekuperation bei einer Bergabfahrt oder einen Antrieb der zeitweisen Triebachse, insbesondere als Boostfunktion bei einem Anfahrvorgang und/oder einer Bergauffahrt, oder bei fehlenden zusätzlichen Antriebsbedarf ein Rollen der zeitweisen Triebachse in einem Passivmodus als Laufachsenmodus auslösen.

Weiter können in der Zugmaschine Schaltpausen des Zugmaschinenantriebs erfasst werden, in denen für eine weitgehende zugkraftunterbrechungsfreie Beschleunigung ein Antriebsmodul bzw. eine Antriebseinheit gesteuert zugeschaltet werden kann. Ebenso kann in ungünstigen Betriebspunkten einer Brennkraftmaschine der Zugmaschine gesteuert eine Rekuperation der Antriebseinheit oder eine Boostfunktion zugeschaltet werden. Auf diese Weise kann der Verbrennungsmotor gegebenenfalls in einem günstigeren Betriebspunkt betrieben werden.

Um alle möglichen Funktionen beim Betrieb und Einsatz eines Antriebsmoduls in einer Zugkombinationen ausnutzen zu können, muss die Zugmaschine hinsichtlich ihrer Sensorik, Datenkommunikation und Energieversorgung kompatibel zu einem Antriebsmodul ausgestattet sein. Der Betrieb und die Zuschaltung eines Antriebsmoduls sollen jedoch auch bei einer Zugkombination mit einer nicht kompatiblen oder nur eingeschränkt kompatiblen Zugmaschine möglich sein. Es wird daher vorgeschlagen, dass ohne oder mit eingeschränkter Kommunikation das Antriebsmodul zumindest teilweise selbst unter Auswertung einer eigenen Sensorik zur Ermittlung der Fahrgeschwindigkeit und deren Änderung, sowie gegebenenfalls der aktuellen oder nächstfolgenden Topographie und gegebenenfalls durch Auswertung von Bremssignalen (zum Beispiel über den ABS-Stecker) entscheidet, ob eine Bergauffahrt oder Bergabfahrt oder ein Beschleunigungsvorgang oder ein Verzögerungsvorgang bzw. Kombinationen daraus vorliegen. Durch eine Auswertung dieser Zustände wird dann im Antriebsmodul selbst festgestellt, ob ein zusätzlicher Antriebsbedarf vorliegt und eine zugeordnete Antriebseinheit insbesondere für eine Boost- oder Rekuperationsfunktion angesteuert wird. Ein Beschleunigungswunsch eines Fahrers der Zugkombination wird beispielsweise über eine Zunahme der Geschwindigkeit bei gleichzeitiger Analyse der aktuellen Steigung detektiert. Dabei kann die aktuelle Topographie über Sensoren und/oder eine nächstfolgende Topographie durch Auswertung von GPS-Informationen ausgewertet werden.

Ob und gegebenenfalls welche Kommunikationsmöglichkeiten mit der Zugmaschine vorliegen wird erfindungsgemäß automatisch festgestellt. Das Antriebsmodul wird in Abhängigkeit von festgestellten Kommunikationsmöglichkeiten erfindungsgemäß dergestalt aktiviert:
- Bei festgestellter fehlender Kommunikationsmöglichkeit mit der Zugmaschine wertet das Antriebsmodul selbstständig eine eigene Sensorik aus und trifft daraus selbstständig die Entscheidung zur Zuschaltung der Antriebseinheit.
- Bei festgestellter Kommunikation zwischen Zugmaschine und Antriebsmodul werden die Vorgaben von der Zugmaschine zur Zuschaltung der Antriebseinheit genutzt.
- In beiden vorstehenden Fällen wird geprüft und festgestellt, ob die Zugmaschine zur Energieversorgung mit dem Antriebsmodul gekoppelt ist. Falls nicht, wird ein erforderlicher Energiespeicher des Antriebsmoduls nur durch Rekuperation beim Bremsen und bei einer Bergabfahrt gefüllt bzw. durch einen Achsantrieb geleert. Bei einer Verbindung mit der Zugmaschine zur Energieversorgung wird diese direkt genutzt und/oder ein Energiespeicher wird zusätzlich durch einen Energietransfer zwischen Zugmaschine und Antriebsmodul gefüllt oder geleert. Zudem ist dabei auch ein Energiemanagement durch einen Ladungsausgleich zwischen einem Antriebsmodul-Energiespeicher und einem Zugmaschinen-Energiespeicher möglich.
- In jedem der vorstehenden Fälle mit unterschiedlichen Verfahrensbedingungen erfolgt aber immer eine zeitweise Aktivierung der Antriebseinheit bei einem festgestellten zusätzlichen Antriebsbedarf zur Antriebsunterstützung bei Anfahrvorgängen und/oder an Steigungen, sowie zum Rekuperieren beim Bremsen bzw. beim Verzögern und im Gefälle .

In einer besonders vorteilhaften Weiterbildung des Verfahrens soll das wenigstens eine Antriebsmodul in einem Rangiermodus auch von Hand, insbesondere mit einer Fernsteuerung, hinsichtlich der Antriebseinheit und/oder einer Lenkung einer Achse steuerbar sein. Damit kann beispielsweise auch bei abgekoppelter Zugmaschine ein Dolly oder ein Trailer einfach, insbesondere in einem abgeschlossenen Gelände eines Logistikzentrums, rangiert werden.

Zudem wird eine Straßenfahrzeug-Zugkombination beansprucht, mit der das erfindungsgemäße Verfahren durchgeführt werden kann. Die sich hieraus ergebenden Vorteile sind identisch mit den bereits gewürdigten Vorteilen des erfindungsgemäßen Verfahrens, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: eine Straßenfahrzeug-Zugkombination als Sattelzugkombination,
- Figur 2: eine schematische Darstellung, aus der der Aufbau eines Antriebsmoduls der Sattelzugkombination hervorgeht;
- Figur 3: eine Zugkombinationen aus einem Lastkraftwagen, einem Dolly und einem Sattelauflieger, und

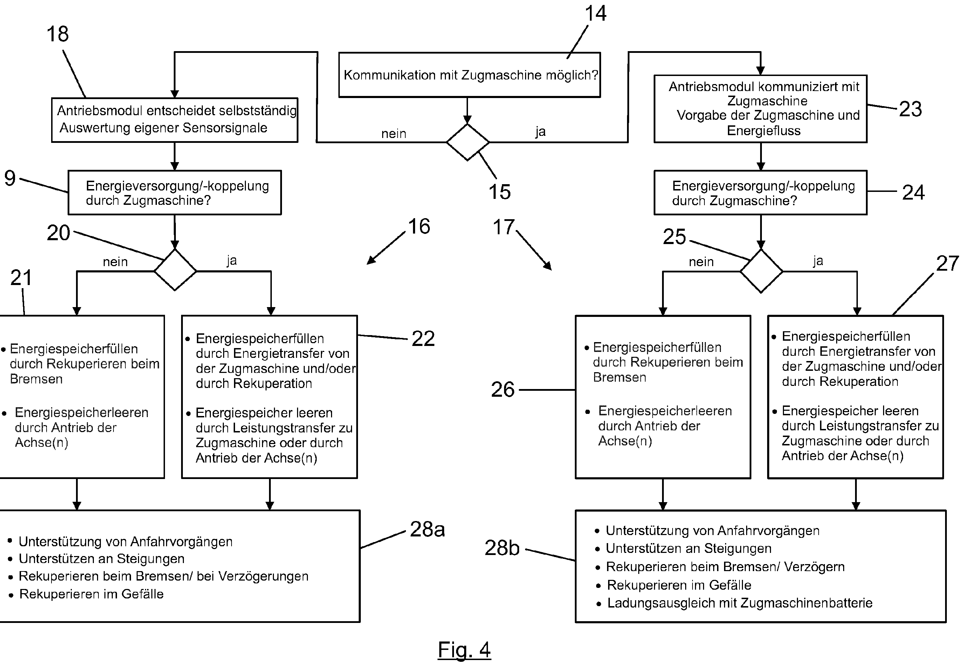

- Figur 4: ein Ablaufdiagramm zu einem Betriebsverfahren für ein Antriebsmodul.

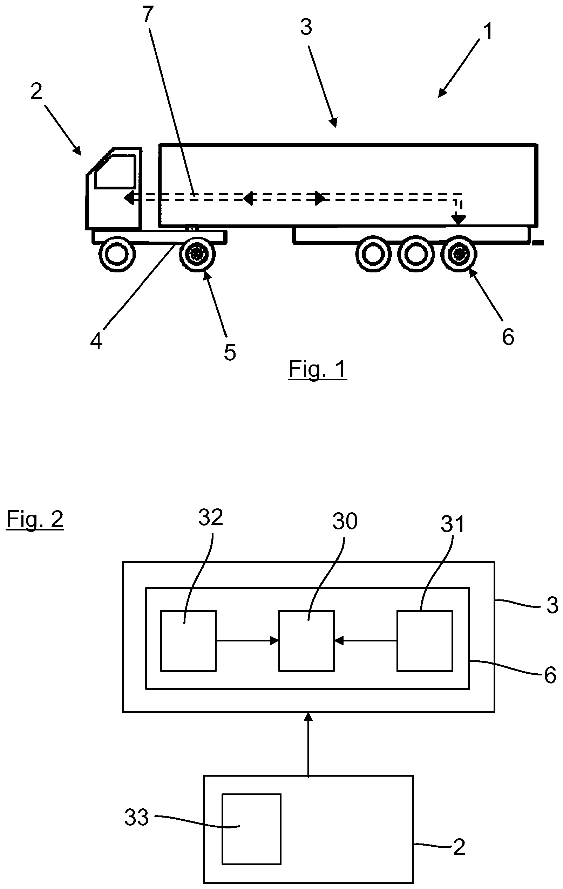

In Figur 1 ist beispielhaft ein Sattelzug 1 dargestellt aus einer Sattelzugmaschine 2 und einem Trailer 3 als Sattelzugauflieger, der mittels einer Sattelplatte-Königszapfen-Verbindung 4 mit der Sattelzugmaschine 2 verbunden ist. Die Sattelzugmaschine 2 hat zwei Achsen, von denen die hintere Achse als permanente Triebachse 5 ausgebildet ist.

Der Trailer 3 weist drei Achsen auf, von denen die hintere Achse als Antriebsmodul bzw. als zuschaltbare Triebachse 6 ausgeführt ist. Schematisch ist in Fig. 1 eine Verbindung 7 zwischen der Sattelzugmaschine 2 und der Triebachse 6 eingezeichnet, wobei diese Verbindung 7 aus einer kabelgebundenen oder kabellosen Kommunikationsleitung zum Datenaustausch und aus einer Energieversorgungsleitung besteht.

Wie in Fig. 2 gezeigt ist, weist die Hinterachse bzw. das Antriebsmodul 6 des Trailers 3 eine Antriebseinheit 30 auf, mittels der die Räder der Hinterachse 6 zeitweise angetrieben werden kann. Die Antriebseinheit 30 ist hier beispielhaft durch einen Elektromotor gebildet, der mittels einer Steuereinheit 31 des Antriebsmoduls 6 angesteuert werden kann. In Abhängigkeit von dem ermittelten Fahrbetriebszustand des Sattelzugs 1 und dem ermittelten Antriebsbedarf des Sattelzugs 1 wird der Elektromotor 30 automatisch mittels der Steuereinheit 31 angesteuert und zeitweise zugeschaltet bzw. aktiviert, so dass die Räder der Trailer-Hinterachse 6 mittels des Elektromotors 30 angetrieben werden.

Gemäß Fig. 2 weist das Antriebsmodul 6 hier beispielhaft auch eine energieübertragend mit dem Elektromotor 30 verbundene elektrische Energiespeichereinheit 32 auf, mittels der der Elektromotor 30 mit elektrischer Energie versorgt werden kann. Die Energiespeichereinheit 32 kann beispielsweise durch Rekuperation mit elektrischer Energie aufgeladen werden. Zudem weist hier beispielhaft auch die Sattelzugmaschine 2 eine Energiespeichereinheit 33 auf, mittels der der Elektromotor 30 ebenfalls mit elektrischer Energie versorgt werden kann. Die Energieübertragung zwischen der Sattelzugmaschine 2 und dem Trailer 3 erfolgt mittels der Leitung 7.

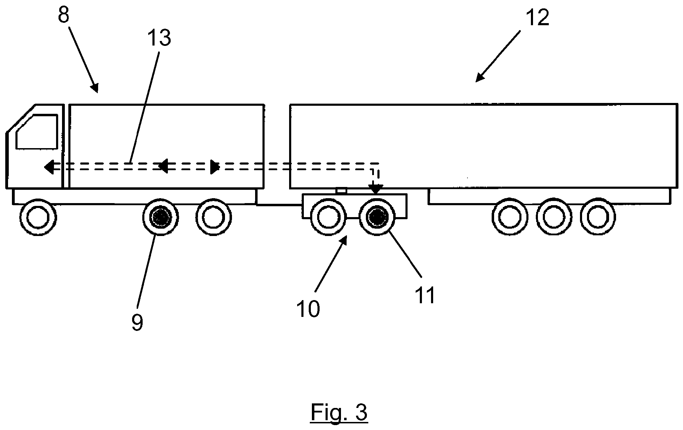

Als weiteres Ausführungsbeispiel ist in Figur 3 eine Zugkombination aus einem dreiachsigen Lastkraftwagen 8 mit einer permanenten Triebachse 9, einem daran angehängten Dolly 10 mit zuschaltbarer Triebachse 11 sowie einem am Dolly 10 angekoppelten Trailer 12. Auch hier ist eine der vorstehenden Verbindung 7 entsprechende Verbindung 13 zwischen dem Lastkraftwagen 8 als Zugmaschine und dem Dolly 10 bzw. der als Antriebsmodul ausgebildeten Triebachse 11 eingezeichnet. Der Aufbau des Antriebsmoduls 11 kann dem Aufbau des in Fig. 2 gezeigten Antriebsmoduls 6 entsprechen. In Figur 1 ist der Trailer 3 ein gezogenes Fahrzeug mit zuschaltbarer Triebachse 6. In Figur 2 ist der Lastkraftwagen 8 die Zugmaschine und der Dolly 10 ein gezogenes Fahrzeug mit zuschaltbarer Triebachse 11.

In Figur 3 ist ein Ablaufdiagramm für den Betrieb und die Steuerung der Antriebseinheit eines oder mehrerer Antriebsmodule als zuschaltbare Triebachsen 6, 11 sowie deren Energiespeicher dargestellt. Vor der Abarbeitung des dargestellten Ablaufdiagramms wurde im Verfahren bereits festgestellt, ob ein Fahrmodus mit einer kompletten Zugkombination oder gegebenenfalls ein Rangiermodus vorliegt, bei dem eine Steuerung eines Antriebsmoduls von Hand durchführbar ist.

Im Falle der Figur 3 liegt ein festgestellter Fahrmodus vor und im Statusrechteck 14 wird geprüft, ob eine Kommunikation und ein Datenaustausch mit der Zugmaschine möglich ist. Ausgehend von der Entscheidungsraute 15 wird im linken Zweig 16 das Verfahren bei fehlender Kommunikationsmöglichkeit und im rechten Zweig 17 mit bestehender Kommunikation betrieben.

Entsprechend entscheidet im linken Zweig 16 gemäß Rechteck 18 das Antriebsmodul selbsttätig über eine Aktivierung seiner Antriebseinheit unter Auswertung eigener Sensorsignale. Gemäß Rechteck 19 wird zudem geprüft, ob eine Energieversorgung/-kopplung durch die Zugmaschine hergestellt ist, wenn nicht (linker Zweig nach der Entscheidungsraute 20) wird ein Energiespeicher des Antriebsmoduls ausschließlich durch Rekuperieren gefüllt und durch einen Antrieb der Achsen geleert (Rechteck 21).

Falls eine Energieversorgung/-kopplung durch die Zugmaschine hergestellt ist (rechter Zweig nach der Entscheidungsraute 20) kann der Energiespeicher sowohl durch Energietransfer von der Zugmaschine und/oder durch Rekuperation gefüllt werden. Eine Energiespeicherleerung erfolgt auch hier durch einen Achsantrieb oder gegebenenfalls durch einen Leistungstransfer zur Zugmaschine (Rechteck 22).

In jedem Fall erfolgt eine bedarfsweise und zeitweise Aktivierung des Antriebsmoduls zur Unterstützung von Anfahrvorgängen und/oder Unterstützung an Steigungen und/oder Rekuperieren beim Bremsen/bei Verzögerungen und/oder Rekuperieren im Gefälle (Rechteck 28a).

Gegenüber dem linken Zweig 16 sind bei festgestellter Kommunikation mit der Zugmaschine vergleichsweise weitere Funktionen entsprechend dem rechten Zweig 17 des Ablaufdiagramms möglich: Durch die Antriebskommunikation mit der Zugmaschine können Vorgaben der Zugmaschine und ein Energiefluss berücksichtigt werden (Rechteck 23).

Auch hier wird geprüft, ob zusätzlich zur Datenkommunikation eine Energieversorgung/-koppelung durch die Zugmaschine erfolgt (Rechteck 24).

Falls dies nicht erfolgt (linker Zweig nach Entscheidungsraute 25) ist auch hier eine Energiespeicherfüllung nur durch Rekuperieren beim Bremsen und gegebenenfalls bei Bergabfahrten möglich. Eine Speicherentleerung erfolgt durch Antrieb einer oder mehreren Achsen (Rechteck 26 entsprechend dem Rechteck 21).

Falls eine Energieversorgung/-kopplung durch die Zugmaschine gegeben ist (rechter Zweig nach Entscheidungsraute 25) ist auch hier eine Energiespeicherfüllung durch Energietransfer von der Zugmaschine und/oder durch Rekuperation möglich. Eine Energiespeicherleerung erfolgt durch Antrieb einer oder mehrerer Achsen oder durch einen Leistungstransfer zur Zugmaschine (Rechteck 27 entsprechend Rechteck 22).

Eine Aktivierung des Antriebsmoduls erfolgt im Diagrammzweig 17 zur Unterstützung von Anfahrvorgängen und/oder zur Unterstützung an Steigungen und/oder zum Rekuperieren beim Bremsen/Verzögern und/oder Rekuperieren im Gefälle und/oder zum Ladungsausgleich mit einer Zugmaschinenbatterie (Rechteck 28b).

### Bezugszeichenliste

- 1: Sattelzug
- 2: Sattelzugmaschine
- 3: Trailer
- 4: Sattelplatte-Königszapfen-Verbindung
- 5: Triebachse (permanent)
- 6: Triebachse (zuschaltbar)
- 7: Verbindung
- 8: Lastkraftwagen
- 9: Triebachse (permanent)
- 10: Dolly
- 11: Triebachse (zuschaltbar)
- 12: Trailer
- 13: Verbindung
- 14: Status-Rechteck
- 15: Entscheidungsraute
- 16: linker Zweig
- 17: rechter Zweig
- 18: Rechteck
- 19: Rechteck
- 20: Entscheidungsraute
- 21: Rechteck
- 22: Rechteck
- 24: Rechteck
- 25: Entscheidungsraute
- 26: Rechteck
- 27: Rechteck
- 28a, 28b: Rechtecke
- 30: Antriebseinheit
- 31: Steuereinheit
- 32: Energiespeichereinheit
- 33: Energiespeichereinheit

## Patentansprüche

1. Verfahren zum Betrieb wenigstens einer Achse einer Straßenfahrzeug-Zugkombination, wobei die Achse (6; 11) außerhalb einer Zugmaschine (2; 8) der Straßenfahrzeug-Zugkombination (1) an wenigstens einem mit der Zugmaschine (2; 8) gezogenen Fahrzeug (3; 10) angeordnet ist,
wobei Daten zu dem aktuellen Fahrbetriebszustand der Straßenfahrzeug-Zugkombination (1) ermittelt werden,
wobei aus diesen Daten ein zeitweiser Antriebsbedarf zusätzlich zum Antrieb (5; 9) der Zugmaschine (2; 8) ermittelt wird,
wobei die Achse (6; 11) des gezogenen Fahrzeugs (3; 10) als Antriebsmodul und zweitweise Triebachse mit einer gesteuert aktivierbaren Antriebseinheit (30) ausgebildet ist,
wobei bei einem ermitteltem zeitweisen Antriebsbedarf die Antriebseinheit (30) automatisch aktiviert und zugeschaltet wird, so dass damit die Achse (6; 11) von einem Laufachsenbetrieb in einen zeitweisen Triebachsenbetrieb geschaltet wird, **dadurch gekennzeichnet,**
**dass** das Antriebsmodul in Abhängigkeit von automatisch festgestellten Kommunikationsmöglichkeiten mit der Zugmaschine (2, 8) dergestalt aktiviert wird,
- **dass** bei festgestellter fehlender Kommunikationsmöglichkeit mit der Zugmaschine (2; 8) das Antriebsmodul selbstständig eine eigene Sensorik auswertet und daraus selbstständig die Entscheidung zur Zuschaltung der Antriebseinheit (30) trifft,
- **dass** dagegen bei festgestellter vorliegender Kommunikation zwischen Zugmaschine (2; 8) und Antriebsmodul Vorgaben von der Zugmaschine (2; 8) zur Zuschaltung der Antriebseinheit (30) genutzt werden,
- **dass** in beiden vorstehenden Fällen geprüft und festgestellt wird, ob die Zugmaschine (2; 8) zu einer Energieversorgung mit dem Antriebsmodul gekoppelt ist, falls nicht wird ein erforderlicher Energiespeicher des Antriebsmoduls nur durch Rekuperation beim Bremsen und/oder Bergabfahrt gefüllt und durch einen Achsantrieb geleert, andernfalls bei einer Verbindung mit der Zugmaschine (2; 8) zur Energieversorgung wird diese direkt genutzt und/oder ein Energiespeicher zusätzlich durch einen Energietransfer zwischen Zugmaschine (2; 8) und Antriebsmodul gefüllt oder geleert, und
- **dass** in jedem Fall eine zeitweise Aktivierung der Antriebseinheit (30) zur Antriebsunterstützung bei Anfahrvorgängen und/oder an Steigungen sowie zum Rekuperieren beim Bremsen und/oder im Gefälle erfolgt.

2. Verfahren nach Anspruch 1, **dadurch gekennzeichnet, dass** die Antriebseinheit (30) mit Antriebsenergie aus der Zugmaschine (2; 8), vorzugsweise mittels einer steckbaren Versorgungsleitung, und/oder aus einer Energiespeichereinheit (32) des Antriebsmoduls versorgt wird.

3. Verfahren nach Anspruch 2, **dadurch gekennzeichnet, dass** ein optimierter Ladungsausgleich zwischen einem Energiespeicher (33), insbesondere einer elektrischen Batterie, der Zugmaschine (2; 8) und einem Energiespeicher (32), insbesondere einer elektrischen Batterie, des Antriebsmoduls automatisch in Verbindung mit einem von Fahrbetriebszuständen, gegebenenfalls mit Abstimmung auf eine vorausliegende Topographie, abhängigen Energiemanagement erfolgt.

4. Verfahren nach einem der Ansprüche 1 bis 3, **dadurch gekennzeichnet,**
**dass** das Antriebsmodul wenigstens eine elektrische Antriebskomponente, insbesondere wenigstens einen Elektromotor (30), wenigstens eine Batterie (32) und/oder elektrische Steuerelemente, aufweist, und/oder
**dass** das Antriebsmodul ein hydraulisches und/oder pneumatisches und/oder mechanisches Antriebssystem mit entsprechenden Steuerelementen, vorzugsweise mit wenigstens einem als Druckspeicher ausgebildeten Energiespeicher, aufweist.

5. Verfahren nach einem der Ansprüche 1 bis 4, **dadurch gekennzeichnet,**
**dass** durch eine drahtlose oder kabelgebundene Kommunikation und einen Datenaustausch zwischen Zugmaschine (2; 8) und Antriebsmodul, vorzugsweise über eine standardisierte Schnittstelle mit einer Kombination aus steckbarer Kommunikations- und Energieversorgungsleitung (7; 13), das Antriebsmodul an die Zugmaschine (2; 8) Informationen über seinen Status, insbesondere über den Ladezustand eines zugeordneten Energiespeichers, übermittelt, und
**dass** die Zugmaschine (2; 8) durch Nutzung seiner Sensorik bezüglich Fahrbetriebszuständen und gegebenenfalls nach Ermittlung eines zeitweisen Antriebsbedarfs Steuerbefehle dem Antriebsmodul übermittelt, die eine Bremsung der zeitweisen Triebachse (6; 11), insbesondere in Verbindung mit einer Rekuperation bei einer Bergabfahrt oder Bremsung, oder einen Antrieb der zeitweisen Triebachse (6; 11), insbesondere als Boostfunktion bei einem Anfahrvorgang und/oder bei einer Bergauffahrt, oder bei fehlendem zusätzlichem Antriebsbedarf ein Rollen der zeitweisen Triebachse (6; 11) in einem Passivmodus als Laufachsenmodus auslösen.

6. Verfahren nach Anspruch 5, **dadurch gekennzeichnet,**
**dass** Schaltpausen des Zugmaschinenantriebs erfasst werden und in den Schaltpausen für eine weitgehend zugkraftunterbrechungsfreie Beschleunigung die Antriebseinheit (30) gesteuert zugeschaltet wird, und/oder
**dass** in ungünstigen Betriebspunkten einer Brennkraftmaschine der Zugmaschine (2; 8) gesteuert eine Rekuperation der Antriebseinheit (30) zugeschaltet wird.

7. Verfahren nach einem der Ansprüche 1 bis 4, **dadurch gekennzeichnet, dass** ohne Kommunikation zu einem Datenaustausch bezüglich Fahrbetriebszuständen und einem zusätzlichen Antriebsbedarf zwischen Antriebsmodul und Zugmaschine (2; 8), das Antriebsmodul selbst unter Auswertung einer eigenen Sensorik zur Ermittlung der Fahrgeschwindigkeit und deren Änderung, sowie gegebenenfalls der aktuellen oder nächstfolgenden Topographie und gegebenenfalls durch Auswertung von Bremssignalen (ABS-Stecker) entscheidet, ob eine Bergauffahrt oder Bergabfahrt oder ein Beschleunigungsvorgang oder ein Verzögerungsvorgang oder eine Kombination daraus vorliegt und ob ein zusätzlicher Antriebsbedarf mit zugeordneter Ansteuerung der Antriebseinheit (30), insbesondere für eine Boost- oder Rekuperationsfunktion, vorliegt.

8. Verfahren nach einem der Ansprüche 1 bis 7, **dadurch gekennzeichnet, dass** wenigstens ein Antriebsmodul in einem Rangiermodus von Hand, insbesondere mit einer Fernsteuerung, bezüglich der Antriebseinheit (30) und/oder einer Achslenkung steuerbar ist.

9. Straßenfahrzeug-Zugkombination mit einer Zugmaschine (2; 8) und wenigstens einem von der Zugmaschine (2; 8) gezogenen Fahrzeug (3; 10) zur Durchführung eines Verfahrens nach einem der vorhergehenden Ansprüche,
wobei Daten zu dem aktuellen Fahrbetriebszustand der Straßenfahrzeug-Zugkombination (1) ermittelbar sind,
wobei aus diesen Daten ein zeitweiser Antriebsbedarf zusätzlich zum Antrieb (5; 9) der Zugmaschine (2; 8) ermittelbar ist,
wobei wenigstens eine Achse (6; 11) des gezogenen Fahrzeugs (3; 10) als Antriebsmodul und zeitweise Triebachse mit einer gesteuert aktivierbaren Antriebseinheit (30) ausgebildet ist,
wobei bei einem ermitteltem zeitweisen Antriebsbedarf die Antriebseinheit (30) automatisch aktivierbar und zuschaltbar ist, so dass damit die Achse (6; 11) von einem Laufachsenbetrieb in einen zeitweisen Triebachsenbetrieb geschaltet wird,
wobei die Antriebseinheit (30) mit Antriebsenergie aus der Zugmaschine (2; 8) und aus einer Energiespeichereinheit (32) des Antriebsmoduls versorgbar ist,
**dadurch gekennzeichnet,**
**dass** das Antriebsmodul in Abhängigkeit von automatisch festgestellten Kommunikationsmöglichkeiten mit der Zugmaschine (2, 8) dergestalt aktiviert wird,
- **dass** bei festgestellter fehlender Kommunikationsmöglichkeit mit der Zugmaschine (2; 8) das Antriebsmodul selbstständig eine eigene Sensorik auswertet und daraus selbstständig die Entscheidung zur Zuschaltung der Antriebseinheit (30) trifft,
- **dass** dagegen bei festgestellter vorliegender Kommunikation zwischen Zugmaschine (2; 8) und Antriebsmodul Vorgaben von der Zugmaschine (2; 8) zur Zuschaltung der Antriebseinheit (30) genutzt werden,
- **dass** in beiden vorstehenden Fällen geprüft und festgestellt wird, ob die Zugmaschine (2; 8) zu einer Energieversorgung mit dem Antriebsmodul gekoppelt ist, falls nicht wird ein erforderlicher Energiespeicher des Antriebsmoduls nur durch Rekuperation beim Bremsen und/oder Bergabfahrt gefüllt und durch einen Achsantrieb geleert, andernfalls bei einer Verbindung mit der Zugmaschine (2; 8) zur Energieversorgung wird diese direkt genutzt und/oder ein Energiespeicher zusätzlich durch einen Energietransfer zwischen Zugmaschine (2; 8) und Antriebsmodul gefüllt oder geleert, und
- **dass** in jedem Fall eine zeitweise Aktivierung der Antriebseinheit (30) zur Antriebsunterstützung bei Anfahrvorgängen und/oder an Steigungen sowie zum Rekuperieren beim Bremsen bzw. bei Verzögerungen und/oder im Gefälle erfolgt.

## Claims

1. Method for operating at least one axle of a road-vehicle tractor-trailer combination, wherein the axle (6; 11) is arranged outside of a tractor (2; 8) of the road-vehicle tractor-trailer combination (1) on at least one vehicle (3; 10) pulled by the tractor (2; 8),
wherein data relating to the current driving operation state of the road-vehicle tractor-trailer combination (1) are ascertained,
wherein a temporary drive demand in addition to the drive (5:9) of the tractor (2; 8) is ascertained from said data,
wherein the axle (6; 11) of the pulled vehicle (3; 10) is designed as a drive module and temporary driving axle with a drive unit (30) that can be activated in a controlled manner,
wherein the drive unit (30) is automatically activated and connected in the case of an ascertained temporary drive demand so that the axle (6; 11) is switched thereby from an idler axle operation to a temporary driving axle operation, **characterized in that**
the drive module is activated depending on automatically determined communication options with the tractor (2, 8) in such a way that
- when a lack of communication option with the tractor (2; 8) is determined, the drive module independently evaluates a separate sensor system and independently from this makes the decision to connect the drive unit (30),
- in contrast, when communication between the tractor (2; 8) and the drive module is determined to be present, specifications from the tractor (2; 8) are used to connect the drive unit (30),
- in both above cases, it is checked and determined whether the tractor (2; 8) is coupled to the drive module for the purpose of energy supply, if not a required energy store of the drive module is filled only by recuperation during braking and/or downhill travel and emptied by an axle drive, otherwise if there is a connection to the tractor (2; 8) for the purpose of energy supply, this is used directly and/or an energy store is additionally filled or emptied by an energy transfer between the tractor (2; 8) and the drive module, and
- in any case, the drive unit (30) is activated temporarily to support the drive during starting procedures and/or on inclines and to recuperate during braking and/or descents.

2. Method according to Claim 1, **characterized in that** the drive unit (30) is supplied with drive energy from the tractor (2; 8), preferably by means of a pluggable supply line, and/or from an energy storage unit (32) of the drive module.

3. Method according to Claim 2, **characterized in that** there is an optimized charge equalization between an energy store (33), in particular an electric battery, of the tractor (2; 8) and an energy store (32), in particular an electric battery, of the drive module that takes place automatically in conjunction with an energy management that is dependent on driving operating states, where appropriate in coordination with an upcoming topography.

4. Method according to one of Claims 1 to 3, **characterized in that**
the drive module has at least one electric drive component, in particular at least one electric motor (30), at least one battery (32) and/or electrical control elements, and/or
the drive module has a hydraulic and/or pneumatic and/or mechanical drive system with corresponding control elements, preferably with at least one energy store that is designed as a pressure reservoir.

5. Method according to one of Claims 1 to 4, **characterized in that**
the drive module transmits information about its status, in particular about the state of charge of an associated energy store, to the tractor (2; 8) by way of a wireless or wired communication and a data exchange between the tractor (2; 8) and the drive module, preferably via a standardized interface with a combination of a pluggable communication and energy supply line (7; 13), and
the tractor (2; 8) uses its sensor system with respect to driving operating states and possibly after ascertaining a temporary drive demand to transmit control commands to the drive module, the control commands triggering braking of the temporary driving axle (6; 11), in particular in connection with recuperation during downhill travel or braking, or triggering a drive of the temporary driving axle (6; 11), in particular as a boost function during a starting process and/or during uphill travel, or rolling of the temporary driving axle (6; 11) in a passive mode as idler axle mode when there is no additional drive demand.

6. Method according to Claim 5, **characterized in that**
switching pauses of the tractor drive are detected and, in the switching pauses, the drive unit (30) is connected in a controlled manner for an acceleration that is substantially free of traction interruption, and/or
a recuperation of the drive unit (30) is connected in a controlled manner at unfavourable operating points of an internal combustion engine of the tractor (2; 8).

7. Method according to one of Claims 1 to 4, **characterized in that**, without communication with respect to driving operating states and an additional drive demand between the drive module and the tractor (2; 8), the drive module itself evaluates a separate sensor system for ascertaining the driving speed and the change thereof, and possibly the current or next topography and possibly evaluates brake signals (ABS plug) to decide whether an uphill travel or a downhill travel or an acceleration process or a deceleration process or a combination thereof is present and whether an additional drive demand with associated actuation of the drive unit (30), in particular for a boost or recuperation function, is present.

8. Method according to one of Claims 1 to 7, **characterized in that** at least one drive module can be controlled in a manoeuvring mode by hand, in particular with remote control, with respect to the drive unit (30) and/or an axle steering system.

9. Road-vehicle tractor-trailer combination, with a tractor (2; 8) and at least one vehicle (3; 10) pulled by the tractor (2; 8), for carrying out a method according to one of the preceding claims,
wherein data relating to the current driving operating state of the road-vehicle tractor-trailer combination (1) can be ascertained,
wherein a temporary drive demand in addition to the drive (5:9) of the tractor (2; 8) can be ascertained from said data,
wherein at least one axle (6; 11) of the pulled vehicle (3; 10) is designed as a drive module and temporary driving axle with a drive unit (30) that can be activated in a controlled manner,
wherein the drive unit (30) can be automatically activated and connected in the case of an ascertained temporary drive demand so that the axle (6; 11) is switched thereby from an idler axle operation to a temporary driving axle operation,
wherein the drive unit (30) can be supplied with drive energy from the tractor (2; 8) and from an energy storage unit (32) of the drive module,
**characterized in that**
the drive module is activated depending on automatically determined communication options with the tractor (2, 8) in such a way that
- when a lack of communication option with the tractor (2; 8) is determined, the drive module independently evaluates a separate sensor system and independently from this makes the decision to connect the drive unit (30),
- in contrast, when communication between the tractor (2; 8) and the drive module is determined to be present, specifications from the tractor (2; 8) are used to connect the drive unit (30),
- in both above cases, it is checked and determined whether the tractor (2; 8) is coupled to the drive module for the purpose of energy supply, if not a required energy store of the drive module is filled only by recuperation during braking and/or downhill travel and emptied by an axle drive, otherwise if there is a connection to the tractor (2; 8) for the purpose of energy supply, this is used directly and/or an energy store is additionally filled or emptied by an energy transfer between the tractor (2; 8) and the drive module, and
- in any case, the drive unit (30) is activated temporarily to support the drive during starting procedures and/or on inclines and to recuperate during braking and/or descents.

## Revendications

1. Procédé permettant de faire fonctionner au moins un essieu d'une combinaison attelée de véhicules routiers, l'essieu (6 ; 11) étant disposé en dehors d'un véhicule tracteur (2 ; 8) de la combinaison attelée de véhicules routiers (1) sur au moins un véhicule (3 ; 10) tracté par le véhicule tracteur (2 ; 8),
dans lequel des données concernant l'état de fonctionnement de conduite actuel de la combinaison attelée de véhicules routiers (1) sont déterminées,
dans lequel, à partir de ces données, une demande d'entraînement temporaire en plus de l'entraînement (5 ; 9) du véhicule tracteur (2 ; 8) est déterminée,
l'essieu (6 ; 11) du véhicule tracté (3 ; 10) étant réalisé sous la forme d'un module d'entraînement et d'essieu moteur temporaire doté d'une unité d'entraînement (30) pouvant être activée de manière commandée,
dans lequel, en cas de demande d'entraînement temporaire déterminée, l'unité d'entraînement (30) est activée et mise en circuit automatiquement de façon à commuter ainsi l'essieu (6 ; 11) d'un mode d'essieu porteur à un mode d'essieu moteur temporaire,
**caractérisé en ce que** le module d'entraînement est activé en fonction de possibilités de communication avec le véhicule tracteur (2, 8) constatées automatiquement de telle sorte
- qu'en cas d'absence de possibilité de communication avec le véhicule tracteur (2 ; 8) constatée, le module d'entraînement évalue de façon autonome son propre système de capteurs et prend sur cette base de façon autonome la décision de mettre en circuit l'unité d'entraînement (30),
- que par contre en cas de communication existante constatée entre le véhicule tracteur (2 ; 8) et le module d'entraînement, les spécifications provenant du véhicule tracteur (2 ; 8) pour la mise en circuit de l'unité d'entraînement (30) sont exploitées,
- que dans les deux cas précédents, on vérifie et établit si le véhicule tracteur (2 ; 8) est couplé au module d'entraînement pour une alimentation en énergie, si ce n'est pas le cas, un accumulateur d'énergie nécessaire du module d'entraînement n'est chargé que par récupération au freinage et/ou en descente et déchargé par un entraînement d'essieu, sinon en cas de connexion avec le véhicule tracteur (2 ; 8) pour l'alimentation en énergie, celle-ci est exploitée directement et/ou un accumulateur d'énergie est chargé ou déchargé en plus par un transfert d'énergie entre le véhicule tracteur (2 ; 8) et le module d'entraînement, et
- que dans tous les cas, une activation temporaire de l'unité d'entraînement (30) pour l'assistance à l'entraînement a lieu lors des opérations de démarrage et/ou sur des montées ainsi que pour la récupération lors du freinage et/ou dans les descentes.

2. Procédé selon la revendication 1, **caractérisé en ce que** l'unité d'entraînement (30) est alimentée en énergie d'entraînement provenant du véhicule tracteur (2 ; 8), de préférence au moyen d'un câble d'alimentation enfichable et/ou provenant d'une unité d'accumulation d'énergie (32) du module d'entraînement.

3. Procédé selon la revendication 2, **caractérisé en ce qu'**un équilibre des charges optimisé a lieu automatiquement entre un accumulateur d'énergie (33), en particulier une batterie électrique, du véhicule tracteur (2 ; 8) et un accumulateur d'énergie (32), en particulier une batterie électrique, du module d'entraînement en liaison avec une gestion de l'énergie dépendant des états de fonctionnement de conduite, le cas échéant en accord avec une topographie anticipée.

4. Procédé selon l'une quelconque des revendications 1 à 3, **caractérisé en ce que**
le module d'entraînement présente au moins un composant d'entraînement électrique, en particulier au moins un moteur électrique (30), au moins une batterie (32) et/ou des éléments de commande électriques, et/ou
le module d'entraînement présente un système d'entraînement hydraulique et/ou pneumatique et/ou mécanique avec des éléments de commande correspondants, de préférence avec au moins un accumulateur d'énergie réalisé sous forme d'accumulateur de pression.

5. Procédé selon l'une quelconque des revendications 1 à 4, **caractérisé en ce que**
par une communication sans fil ou filaire et un échange de données entre le véhicule tracteur (2 ; 8) et le module d'entraînement, de préférence par une interface standardisée avec une combinaison d'un câble de communication et d'un câble alimentation en énergie enfichables (7 ; 13), le module d'entraînement transmet au véhicule tracteur (2 ; 8) des informations concernant son statut, en particulier l'état de charge d'un accumulateur d'énergie associé, et
le véhicule tracteur (2 ; 8), en exploitant son système de capteurs en termes d'états de fonctionnement de conduite, et le cas échéant après avoir déterminé une demande d'entraînement temporaire, transmet des instructions au module d'entraînement qui déclenchent un freinage de l'essieu moteur temporaire (6 ; 11), en particulier en liaison avec une récupération lors d'une descente ou d'un freinage, ou un entraînement de l'essieu moteur temporaire (6 ; 11), en particulier comme une fonction de suralimentation lors d'une opération de démarrage et/ou en montée, ou en l'absence de demande d'entraînement supplémentaire, une rotation de l'essieu d'entraînement temporaire (6 ; 11) dans un mode passif comme mode d'essieu porteur.

6. Procédé selon la revendication 5, **caractérisé en ce que**
des pauses de commutation de l'entraînement de véhicule tracteur sont détectées, et dans les pauses de commutation, pour une accélération largement sans interruption de la force de traction, l'unité d'entraînement (30) est mise en circuit de manière commandée, et/ou
pour des points de fonctionnement dynamique défavorables d'un moteur à combustion interne du véhicule tracteur (2 ; 8), une récupération de l'unité d'entraînement (30) est mise en circuit de manière commandée.

7. Procédé selon l'une quelconque des revendications 1 à 4, **caractérisé en ce que** sans communication pour un échange de données concernant les états de fonctionnement de conduite et une demande d'entraînement supplémentaire entre le module d'entraînement et le véhicule tracteur (2 ; 8), le module d'entraînement décide de lui-même, en évaluant son propre système de capteurs pour déterminer la vitesse de conduite et sa variation, ainsi que le cas échéant la topographie actuelle ou suivante, et le cas échéant par l'évaluation de signaux de freinage (connecteur ABS), si une montée ou une descente ou une opération d'accélération ou une opération de décélération ou une combinaison des celles-ci est présente, et s'il existe une demande d'entraînement supplémentaire avec un pilotage associé de l'unité d'entraînement (30), en particulier pour une fonction de suralimentation ou de récupération.

8. Procédé selon l'une quelconque des revendications 1 à 7, **caractérisé en ce qu'**au moins un module d'entraînement peut être commandé manuellement, en particulier à l'aide d'une télécommande, dans un mode de manœuvre par rapport à l'unité d'entraînement (30) et/ou à une direction d'essieu.

9. Combinaison attelée de véhicules routiers, comprenant un véhicule tracteur (2 ; 8) et au moins un véhicule (3 ; 10) tracté par le véhicule tracteur (2 ; 8), permettant d'exécuter un procédé selon l'une quelconque des revendications précédentes,
dans laquelle des données concernant l'état de fonctionnement de conduite actuel de la combinaison attelée de véhicules routiers (1) peuvent être déterminées,
dans laquelle, à partir de ces données, une demande d'entraînement temporaire en plus de l'entraînement (5 ; 9) du véhicule tracteur (2 ; 8) peut être déterminée,
au moins un essieu (6 ; 11) du véhicule tracté (3 ; 10) étant réalisé sous la forme d'un module d'entraînement et de d'essieu moteur temporaire doté d'une unité d'entraînement (30) pouvant être activée de manière commandée,
dans laquelle, en cas de demande d'entraînement temporaire déterminée, l'unité d'entraînement (30) peut être activée et mise en circuit automatiquement de façon à commuter ainsi l'essieu (6 ; 11) d'un mode d'essieu porteur à un mode d'essieu moteur temporaire,
l'unité d'entraînement (30) pouvant être alimentée en énergie d'entraînement provenant du véhicule tracteur (2 ; 8) et provenant d'une unité d'accumulation d'énergie (32) du module d'entraînement,
**caractérisée en ce que** le module d'entraînement est activé en fonction de possibilités de communication avec le véhicule tracteur (2, 8) constatées automatiquement de telle sorte
- qu'en cas d'absence de possibilité de communication avec le véhicule tracteur (2 ; 8) constatée, le module d'entraînement évalue de façon autonome son propre système de capteurs et prend sur cette base de façon autonome la décision de mettre en circuit l'unité d'entraînement (30),
- que par contre en cas de communication existante constatée entre le véhicule tracteur (2 ; 8) et le module d'entraînement, les spécifications du véhicule tracteur (2 ; 8) pour la mise en circuit de l'unité d'entraînement (30) sont exploitées,
- que dans les deux cas précédents, on vérifie et établit si le véhicule tracteur (2 ; 8) est couplé au module d'entraînement pour une alimentation en énergie, si ce n'est pas le cas, un accumulateur d'énergie nécessaire du module d'entraînement n'est rechargé que par récupération au freinage et/ou en descente et déchargé par un entraînement d'essieu, sinon en cas de connexion avec le véhicule tracteur (2 ; 8) pour l'alimentation en énergie, celle-ci est exploitée directement et/ou un accumulateur d'énergie est chargé ou déchargé en plus par un transfert d'énergie entre le véhicule tracteur (2 ; 8) et le module d'entraînement, et
- que dans tous les cas, une activation temporaire de l'unité d'entraînement (30) pour l'assistance à l'entraînement a lieu lors des opérations de démarrage et/ou sur des montées ainsi que pour la récupération lors du freinage et/ou dans les descentes.
